# EUROPEAN PATENT APPLICATION

(11) **EP 3 068 165 A1**
(43) Date of publication of application: **14.09.2016**
(21) Application number: 16167617.6
(22) Date of filing: 14.11.2010
(51) Int. Cl.: H04W 28/08

(54) **CIRCUIT SWITCHED FALLBACK PAGING FOR MOBILITY MANAGEMENT ENTITY POOL**

(62) Divisional of application: 10812851.3
(71) Applicant: Telefonaktiebolaget LM Ericsson (publ), 164 83 Stockholm (SE)
(72) Inventor: YANG, Yong, 42836 Kållered (SE); RYDNELL, Gunnar, 411 32 Göteborg (SE); SANDER, Ann-Christine, 417 57 Göteborg (SE)
(74) Representative: Ericsson

(57) **Abstract**

There is provided a method for a switching unit (MSC_I) in a network in which a user equipment (UE) is being adapted to be attached and connected to a 2G/3G network for performing circuit switched, CS, communication with the network, or being adapted to be attached to a LTE network, for performing packet switched, PS, communication, wherein the PS communication is adapted to be performed via a mobility management entity, MME, which may be arranged in a pool of MME's, the user equipment (UE) being adapted to receiving page signals (18) so as to inform the user of incoming calls, the switching unit (MSC_I) being adapted for issuing page signals (16-1; 16-2; 16-3) to MME nodes, - receiving (13) an incoming external CS call; - performing detection (20) of a first selected MME, as to whether the first selected MME is ready or not; - if detecting a not ready state (22) concerning the selected MME (MME_11), selecting (24) an alternative MME and issuing a page message (16; 16-1) to the alternative MME (MME_12) (16-1) belonging to the same pool of MME's as the first MME.

## Description

### Technical field

This invention relates to the field of handling calls in an integrated telecommunication network in which at least circuit switched and packet switched calls are a possibility.

### Background

In the 3GPP CSFB (Circuit Switched FallBack) architecture 3GPP TS 23.272 v10.1.0 a user equipment, UE, may be reached for terminating (i.e. making or establishing) a circuit switched, CS, call via paging in the, packet switched, PS, domain.

The UE, registers in the Mobility Management Entity, MME, using the Combined EPS/IMSI attach, and the Mobile switching Centre, MSC, is updated for UE registration by the MME. The interface used between the MME and the MSC is the SGs interface. The function is used in case of lacking IMS voice support in the UE or in the NW, whereby LTE (Long Term Evolution - access) is used for packet switched, PS, service while the fallback to circuit switched, CS, service is used for voice.

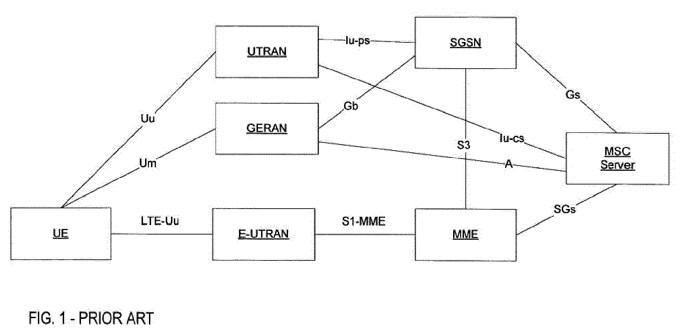

Fig. 1 shows a prior art non-roaming network architecture in which communication may be carried through various 3GPP access and network technologies. There is shown a GERAN (GSM EDGE Radio Access Network, -referred to as 2G) access interface (comprising a BSS (Base Station Subsystem (not shown)), a UTRAN (UMTS Terrestrial Access Network, -referred to as 3G,) interface (comprising a NodeB base station (not shown)) and an E-UTRAN (referred to as LTE (Long Term Evolution)) interface (comprising an eNodeB base station (not shown)).

### Non-roaming architecture for 3GPP accesses.

The MME may be deployed in what is called a MME pool, which means that the several MMEs are able to serve the UE at attach. This is accomplished by the MMEs being configured such that more that one MME is serving a group of TAs. As long as the UE stays in the geographic area served by the MME pool no MME change will be necessary for the UE due to mobility. On the CS side the MSC may in turn also be configured in a pool configuration, which however is not relevant for this invention. The pool configuration provides for redundancy, load sharing and efficient signalling by potentially decreasing the number of inter-MME TAU/HO (Traffic Area Update/ Handover).

### Problems with existing solutions

The inventors of the present document has acknowledged that the existing solutions for MT CS call is such that the CS Call is placed in the MSC and if the UE is registered via the SGs interface, i.e. an SGs association exists in the MSC, the MSC will issue a CS Page to the UE via the MME over SGs. The MME will in turn page the UE with a CS indicator and if successful, the UE will move to CS to receive the call. In case there is a paging problem, the UE is not reached by the page message. The MSC may or may not re-submit the page depending on whether the MSC is informed, e.g. by a Paging Reject message from the MME. Eventually, the MSC will give up and the call is lost. The paging problem may arise for different reasons, such as: The MME has restarted; the transmission between the MME and the MSC is broken; or the MME has crashed and the SGs association is lost.

The paging problem is due to that when the UE is in IDLE state the UE may not be aware of network problems, not even if the MME crashes. Only when a periodic update timer in the UE indicates that a TAU is necessary, the UE will be made aware of such problems, and then re-attach. Until that happens, there will be a synchronization problem between the UE and the network. The UE will remain in the PS domain expecting to be reachable, while the MSC will not be able to reach the UE, resulting in dropped calls.

### References

3GPP TS 23.401 V10.1.0 General Packet Radio Service (GPRS) enhancements for Evolved Universal Terrestrial Radio Access Network;
3GPP TR 23.272 V10.1.0 Circuit Switched (CS) fallback in Evolved Packet System (EPS); Stage 2;
3GPP TS 29.118 V10.1.0 Mobility Management Entity (MME) - Visitor Location Register (VLR); SGs interface specification;
3GPP TS 29.303 Domain Name System Procedures; GPP TS 23.003 Numbering, addressing and identification.

### Summary of the invention

The object of the present invention is to avoid some or all the disadvantages mentioned above.

This object has been solved by a method for a switching unit in a network in which a user equipment is being adapted to be attached and connected to a 2G/3G network for per-forming circuit switched, CS, communication with the network, or being adapted to be attached to a LTE network, for performing packet switched, PS, communication, wherein the PS communication is adapted to be performed via a mobility management entity, MME, which may be arranged in a pool of MME's, that is, a group of MME's being replaceable with one another and covering substantially the same geographical area, the user equipment being adapted to receiving page signals so as to inform the user of incoming calls.
The switching unit is being adapted for issuing page signals to MME nodes,
- receiving an incoming external CS call;
- performing detection of a first selected MME, as to whether the first selected MME is ready or not;
- if detecting a not ready state concerning the selected MME, selecting an alternative MME and issuing a page message to the alternative MME belonging to the same pool of MME's as the first MME.
The selection of the alternative MME is performed according to a pre-determined list of at least one alternative MME stored in the switching unit.
The method involves that the switching unit, prior to receiving an incoming external CS call, comprises the step of
- receiving a location update request message from a MME under an attach procedure or traffic update / location update procedure, wherein the location update request message comprises the name of the MME serving the UE currently.

There is also provided a switching unit apparatus.

The above object has moreover been solved by a method for a mobility management entity, MME, adapted for sending a location update request to a switching unit (MSC/VLR), wherein the MME provides a predetermined list of at least one alternative MME within a pool of MME's in a location update request message. The MME is providing - a location update request message to the switching unit under an attach procedure or traffic update / location update procedure, wherein the location update request message comprises the name of a first MME serving the UE currently, wherein the selection of an alternative MME can be performed according to a predetermined list of at least one alternative MME stored in the switching unit to which the location update request message is transmitted, such that a page message to the alternative MME belonging to the same pool of MME's as the first MME can be transmitted.

Also a MME apparatus has been provided.

According to a further embodiment there is provided a method for a switching unit in a network in which a user equipment is being adapted to be attached and connected to a 2G/3G network for performing circuit switched, CS, communication with the network, or being adapted to be attached to a LTE network, for performing packet switched, PS, communication, wherein the PS communication is adapted to be performed via a mobility management entity, MME, which may be arranged in a pool of MME's, the user equipment being adapted to receiving page signals so as to inform the user of incoming calls. The switching unit moreover being adapted for issuing page signals to MME nodes, - receiving an incoming external CS call; - performing detection of a first selected MME, as to whether the first selected MME is ready or not; - if detecting a not ready state concerning the selected MME, selecting an alternative MME and issuing a page message to the alternative MME belonging to the same pool of MME's as the first MME.

According to a further aspect of the invention there is provided a method, wherein, the switching unit starts a timer and wherein the detection of the not ready state involves not receiving a service request signal from the selected MME before the timer expires.

The detection of the not ready state may involve receiving a signal indicative of a failure from the selected MME.

The selection of an alternative MME may be performed according to a predetermined list of at least one alternative MME stored in the switching unit.

According to a further aspect, it is examined whether a reset message from a MME is received, and if so subsequently determining the MME to be in a not ready state.

The predetermined list may be established, according to a further aspect, by issuing a DNS query to a DNS server.

The predetermined list may be indicated in or resolved from information in a location update request message from a MME under an attach procedure or traffic update / location update procedure, which predetermined list is subsequently stored in the switching unit.

According to a further aspect, an initial list (A1) is stored in the switching unit concerning alternative MME's to select upon a serving MME being in a state of not ready.

According to a further aspect the initial list in the switching unit is updated when a MME makes an attach or location update.

There is also provided a method for a mobility management entity, MME, adapted for sending a location update request to a switching unit, wherein the MME provides a predetermined list of at least one alternative MME within a pool of MME's in a location update request message.

There is moreover provided a mobility management entity, MME, comprising a control unit, a memory and an interface unit an internal bus, the MME being adapted for sending a location update request to a switching unit, wherein the MME provides a predetermined list of at least one alternative MME within a pool of MME's in a location update request message.

An advantage with the invention is that it allows the switching unit to reach a UE that is in IDLE and is in a state of combined EPS/IMSI attached to the switching unit. The key point is to let the switching unit be aware of and to use the fact that the MMEs are configured in an MME pool. Since all the MMEs in the MME pool may cover the same geographical area, the UE may be reachable for paging from each of the MMEs in the MME pool, not only from the one it is registered to.

According to an aspect of the invention, if the switching unit discovers that the UE is not reachable via the registered MME, the switching unit will select a different MME belonging to the same MME pool and submit the CS page for the UE via that alternative MME. The switching unit may comprise the IMSI and / or may comprise LA information in the page message such that efficient paging can be done in the alternative selected MME, which otherwise would require global paging. When the page sent from the alternative MME reaches the UE, the UE proceeds according to the CSFB MT procedure such that the call can be continued in the CS domain. The UE may perform PS procedures independently, e.g. the UE may perform a Routing Area Update towards a 3G SGSN which will fail and forcing the UE to re-attach or the UE may send "Suspend" to the SGSN in 2G if DTM (Dual Transfer Mode) mode is not supported in 2G.

### Brief description of the drawings

- Fig. 1: shows a prior art network architecture,
- fig. 2: shows a prior art attach procedure,
- fig. 3: shows a prior art traffic area / location area update procedure,
- fig. 4: shows a switching unit according to the invention and surrounding GERAN units,
- fig. 5: shows a MME according to the invention,
- fig. 6: shows a first and second embodiment of a method for a switching unit according to the invention,
- fig. 7: shows a signalling diagram relating to the first embodiment of the invention,
- fig. 7a: shows another signalling diagram according to the first embodiment,
- fig. 8: shows a further embodiment of a method for a switching unit and a MME according to the invention,
- fig. 9: shows a further embodiment of a method for a switching unit and a MME according to the invention, and
- fig. 10: and 11 shows lists for selecting alternative MME's according a given priority order.

### Detailed description

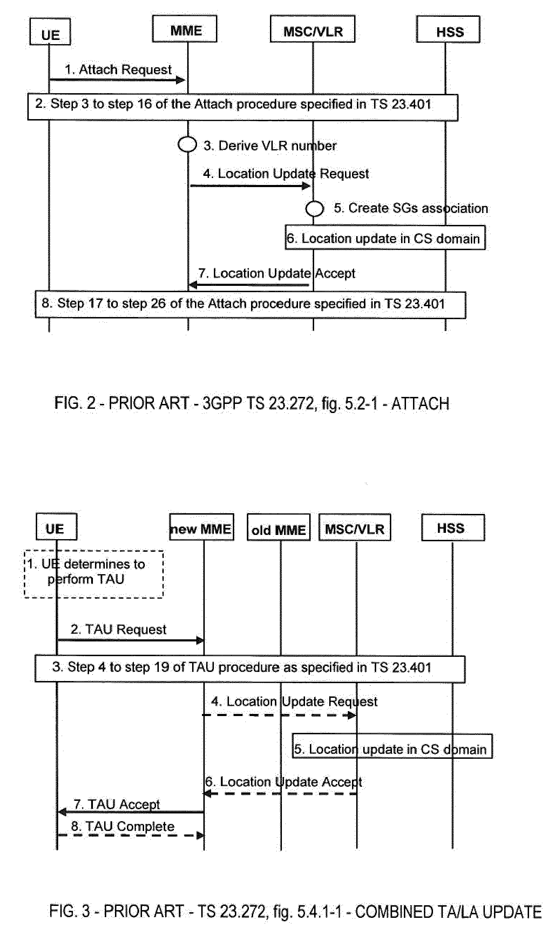

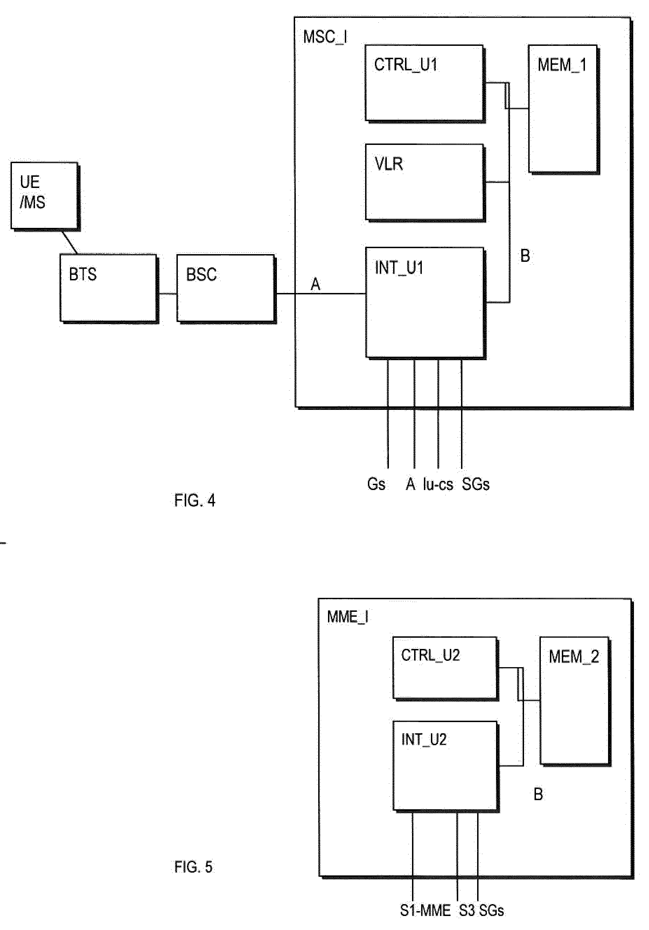

The present invention relates among others to a switching unit such as a mobile switching centre (MSC) or a combined mobile switching centre / VLR server, denoted MSC_I. As shown in fig. 4, the switching unit according to the invention comprises a control unit, CTRL_U1, and an interface unit, INT_U1 and possibly a visitor's location register, VLR. The interface unit comprises interfaces Gs to SGSN, lu-cs to UTRAN, SGs to MME and A to GERAN, whose primary nodes are illustrated in fig. 2, namely the base station centre, BSC, and the base station transmission set, BTS. The functionalities described in the following are carried out by the control unit, CTRL_U1.

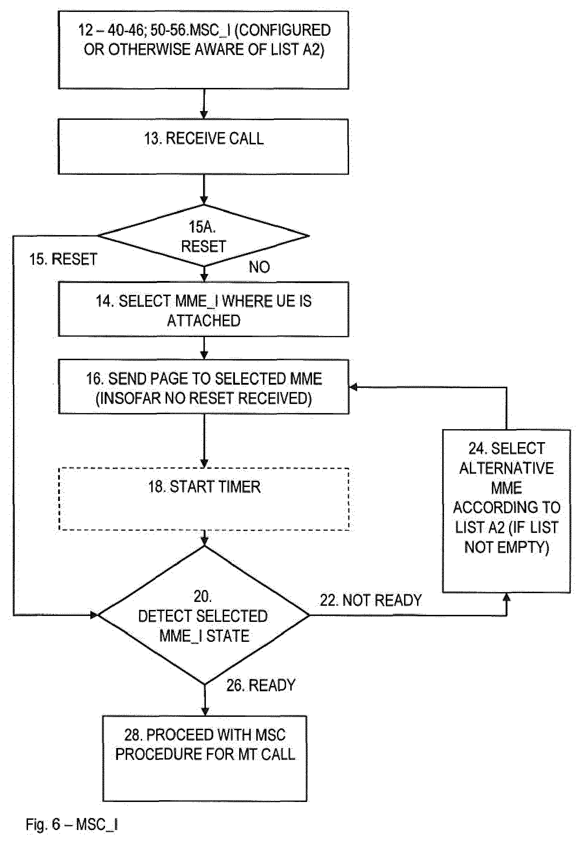

In fig. 4, a first embodiment of a unit switching unit MSC_I according to the invention and surrounding GERAN units, a base station controller (BSC) and a base transceiver set (BTS) is shown coupling to a mobile station UE/ MS over the air interface. The switching unit, MSC_I, performs the role as a mobile switching centre. It may comprise VLR (Visitor Location Register) functionality and the switching unit may consequently be referred to as a mobile switching centre / VLR server. The switching unit, comprises moreover a control unit, CTRL_U1 which again may comprise one or more processors, a memory MEM_1 and an interface unit INT-U1 providing a Gs; A; lu-cs; and a SGs interfaces as shown in fig. 1. There is also provided an internal bus, B. The switching unit is adapted to carry out a routine shown in fig. 6, which may be implemented as a software program and stored in memory MEM_1 and executed by control unit CTRL_U1.

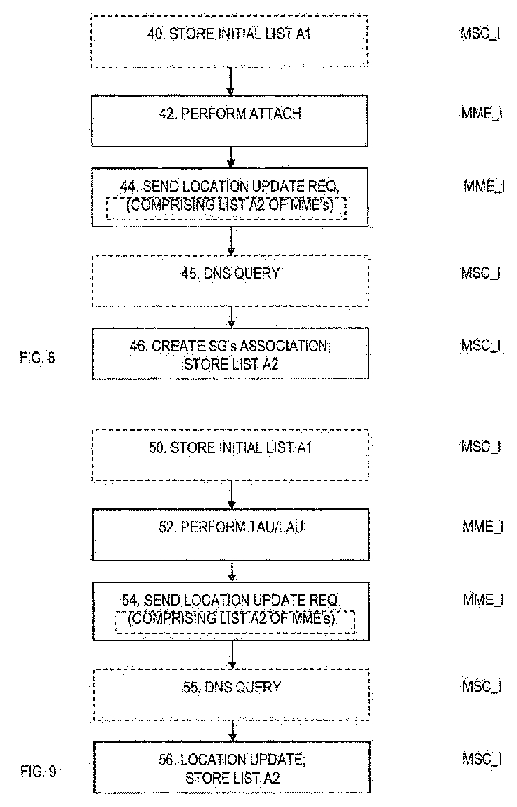

In fig. 5, a MME, MME_I, according to the invention is shown, comprising a control unit, CTRL_U2, comprising one or more processors, a memory MEM_2 and an interface unit INT_U2 providing a S1-MME; a S3; and a SGs interface. An internal bus B is also provided. The MME is adapted to carry out a routine shown in figs. 8 and 9, which may be implemented as a software program and stored in memory MEM_2 and executed by control unit CTRL_U2.

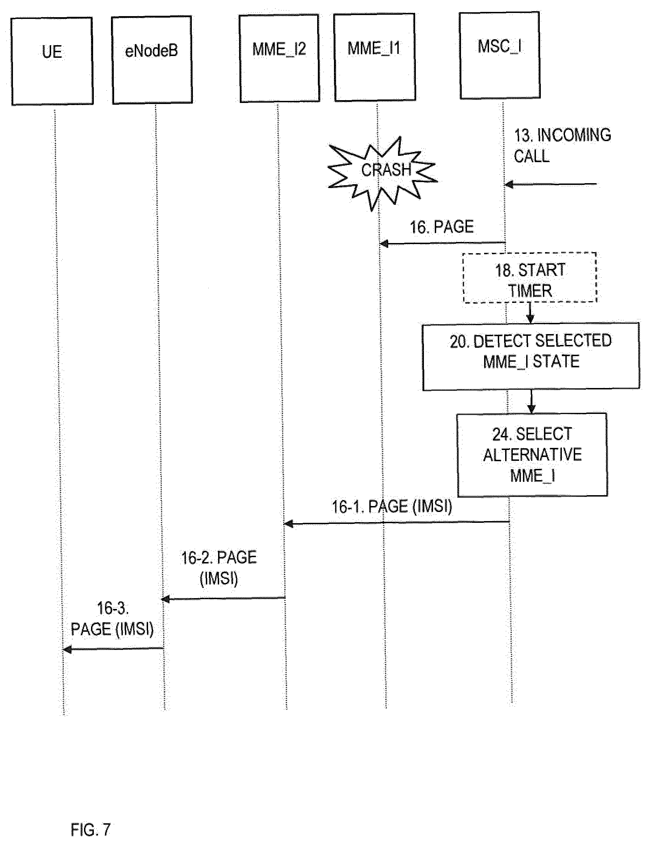

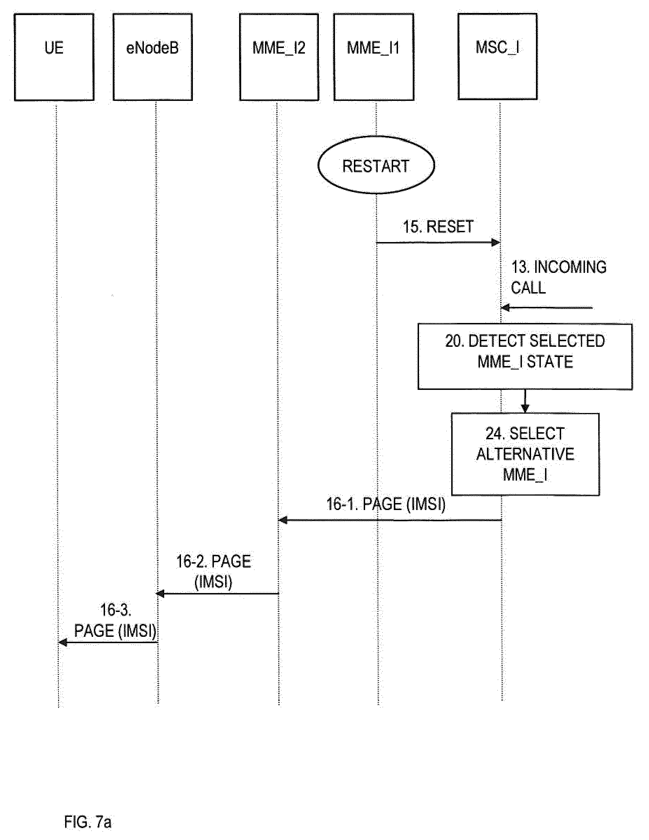

In **fig. 6****,** a first embodiment of a method for a switching unit according to the invention is shown. Reference will also be made to **fig. 7****,** showing a signalling diagram relating to the first embodiment of the invention.

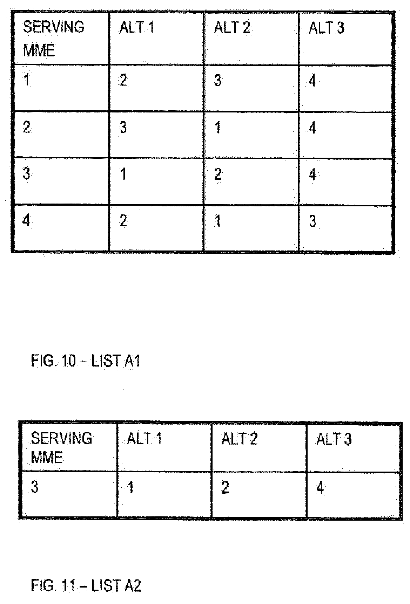

In step 12, fig. 6, the switching unit is made aware of a list A2 of at least one alternative MME of a MME pool. The list A2 could for instance have the form as shown in fig. 11. According to the invention, more options exist for carrying out this step and the list may moreover be updated over time. Various embodiments are shown in figs. 8 and 9, which will be dealt with further below.

In step 13, the switching unit MSC_I receives a mobile terminated (MT) CS voice call from an external network.

In step 15A, it is examined whether a reset signal is received. If no, move to step 14, if yes, move to step 20.

In step 14, the switching unit selects the MME to which the UE - receiving the call - is currently attached (MME_I1). This is the serving MME.

Subsequently, a page message is transmitted to the selected MME (e.g. MME_I), step 16.

As an option shown in fig. 7, a timer, set to expire at a given count, may start, step 18.

In step 20, the method investigates the state of the selected MME, for instance a unit MME_I as depicted in fig. 5, but also a standard known MME unit. It is detected whether the selected MME is ready 26 or not 22. The detection could be based on the absence of a reply from the selected MME before expiry of the timer set under step 18. Alternatively, the selected MME in question could have signalled specific signals concerning a fail state or restart indicating the selected MME to be not ready.

Following the not ready detection 22, the switching unit selects in step 24 a new alternative MME according to the list A2 stored in the switching unit. Consequently, a page message is transmitted to the new selected MME (MME_I2) in step 18, whereupon the timer is set anew.

Whenever, it is detected in step 20 that the selected MME is ready, 26, the method proceeds with known MSC procedures for the call, step 28.

The scenario could be as depicted in fig. 7, where for the incoming CS call 13, a malfunctioning appears in MME_I1 to which the called UE is presently attached. A first page message 16 is sent to the malfunctioning MME from which no reply is received.

Steps 18, 20 and 24 are executed and a new page message, denoted 16-1, including the IMSI of the called UE is indicated, and transmitted to the alternative MME, in this case MME_I2, selected under step 24.

This time, a ready MME is found and the page message is forwarded 16-2 to an eNodeB and further 16-3 to the UE. Consequently, the CS call can be terminated and answered by the UE.

In **fig. 7a****,** another signalling diagram according to the invention is shown. In this case, MME_I1 is restarted and transmits a reset signal 15 to the switching unit. When an incoming call 13 is received, the switching unit after test 15A acknowledging the reset signal detects 20 the selected MME as not ready due to the reset signal. Subsequently, the switching unit consults the list A2 and finds that MME_I2 is to be used as a next attempt, and the procedure follows as in fig. 7.

In **fig. 6****,** the step of detecting the state of the serving MME 20 may be carried out according to the invention in various manners:
• A. When the MME has restarted and all records of the UE are lost in the MME. The switching unit may or may not be aware of the MME restart; depending on if a reset message has been sent or not.
If a reset is not sent when the MME receives a page, depending on the implementation, the MME may page the UE as shown in fig. 7 if the IMSI and LAI are included or may reject the page by sending a reject message to the switching unit. If a reject message, or a signal indicative of a failure in the MME, issued from the selected MME (Not shown) or no reply is received in the switching unit - as shown in fig. 7 - the switching unit detects in step 24 a paging problem and detects the MME to be not ready 22. Hence, the reception of a reject message is an alternative - or an addition - to the timer based detection.
• B. The detection may also be based on a finding that the transmission between the MME and the switching unit is broken, e.g. a cable has been cut. The protocol stack for the SGs interface is using SIGTRAN, shown in table 2:

**Table 2**

| |
|---|
| SGsApp |
| TCAP |
| SCCP |
| M3UA |
| SCTP |
| IP |

In this case, the SGs association is lost. This may be detected in the switching unit by SCCP monitoring in step 20. When the transmission loss is detected, an alternative MME is selected 24 for all UEs associated over this interface and an MME using a different SGs interface, but still in the same MME pool.
• C. The MME has crashed and the SGs association is lost. When the transmission is lost, the switching unit may send a page message to the first MME and get an indication back from the transmission protocol that the peer is unavailable (Not shown). The switching unit determines in step 20 the MME to be not ready. The condition may be short but also prevailing for several hours or more.

As mentioned above, the way the switching unit is made aware of the list of at least one alternative MME can be accomplished in various ways according to the invention, as illustrated in **figs. 8 and 9****.**

The selection should preferably involve selecting a MME in the same MME pool to which a MME the called UE is attached, or to a group of MME's being available to the switching unit, being replaceable with one another and covering substantially the same geographical area. In this document, reference will be made to such a group of replaceable MME's as a pool of MME's. According to the invention, three further embodiments are provided for selecting the MME in step 16 for the first time and establishing the list of at least an alternative MME, 16-1:
I. by using a DNS query in the switching unit;
II. by using a default MME configured in the switching unit based on some additional criteria, e.g. LAI, UE IMSI (number series) etc.;
III. by using the MME who has been recorded in the switching unit (e.g. it was included in the SGs association establishment from the MME.).

These further methods make use of at least some of the method steps undertaken in connection with attach and / or location update.

The methods for the switching unit according to the invention and the MME according to the invention for attach **fig. 8** and location update **fig 9****.** comprise the following steps, whereby some steps are optional:
In **fig. 8****,** in step 40 an initial list A1, e.g. a list as shown in fig. 10, may be stored in the switching unit. In some further embodiments, the list A1 may not be provided initially.

In step 42 - e.g. following in any time span after step 40 - the MME performs attach and in step 44, transmits a location update request. According to one further embodiment of the invention, the location update may comprise a list - as A2 shown in fig. 11, of at least one alternative MME to the MSC. The list A2 may be configured as an excerpt of the list A1 containing a sequence of alternatives for the serving MME in question.

If no list is comprised in the location update request, a DNS query may be carried out, 45.

Subsequently, the switching unit MSC_I creates 46 the SGs association as in the prior art, **fig. 2****,** but moreover stores the list A2 in the switching unit.

In **fig. 9****,** in step 52 - e.g. following in any time span after step 50 - the MME performs TAU (Traffic Area Update)/LAU (Location Area Update) update and transmits a location update request comprising the list of at least one alternative MME to the MSC. Subsequently, the switching unit MSC_I creates 56 the SGs association as in the prior art, **fig. 3****,** but moreover stores the list in the switching unit.

It is seen that the invention provides a detection of the paging problem and provides various ways for solving this problem, which may occur under the following circumstances:
In fig. 9, the procedure is shown for traffic area update/ location area update, which is similar to the fig. 8 procedure. As appears 52 differs from 42 in that a traffic area update / location update is performed by the MME. Moreover, in 56 a location update is done in the switching unit. Otherwise step 50 corresponds to step 40, 54 corresponds to 44, 55 corresponds to 45. Since the TAU/LAU procedure resembles the attach procedure, the latter will only be explained.

### I. DNS query

The first further embodiment enabling the MME selection, involves that the switching unit MSC_I uses information, e.g. LAI (Location Area Identity), to construct a DNS (Domain Name Server) string for a DNS query. The LAI is first available in the switching unit after the attach, step 42. The syntax of a DNS string in EPC (Evolved Packet Core) is specified according to TS 29.303. According to the invention, the Domain Name Service resolves a DNS string into a list of possible MME addresses in the Pool which may serve the UE and the switching unit can select a MME from this list. Consequently, the switching unit can page the UE in that new MME including the LAI in the IMSI page 16-1 as illustrated in figs 7 and 7a. Such a step of DNS query resolution could be undertaken in steps 45 in fig. 8. Hence, in fig. 8, steps 42, 44 (without list A2), 45 and 46 are performed.

### II. Default MME configured

The second further embodiment requires configuration in the switching unit of a list A1 of MMEs in the pool or a default MME associated with a pool. In the Location Update message 44 undertaken as illustrated in fig. 8, the switching unit will receive the 'MME name' of the MME serving the UE currently. The switching unit can from this information resolve the list A2 pertaining to the serving MME, and the list A2 need not be provided in the location update request message 44. Hence, in fig. 8 steps 40 (List A1), 42, 44 (without list A2) and 46 are performed.

### III. Alternative MME signalling

The third further embodiment of MME selection according to the invention makes use of a modification of the known SGs association message according to TS 29.118 from the MME to the switching unit, in such a way that the MME indicates one or more alternative MME addresses at attach or location update (TAU/LAU), as shown in figs. 8 and 9. According to this further embodiment, the Location Update Request message "4" known form the prior art and shown in figs. 2 and 3 above, is changed and a new optional IE (Information Element) for the list of at last an alternative MME is added.
The modified SGsAP-LOCATION-UPDATE-REQUEST 4 message from the MME to the switching unit may be arranged according to the invention as shown in table 1 below:

**Table 1**

| **Information element** | **Type/Reference** | **Presence** | **Format** | **Length** |
|---|---|---|---|---|
| Message type | Message type 9.2 | M | V | 1 |
| IMSI | IMSI 9.4.6 | M | TLV | 6-10 |
| MME name | MME name 9.4.13 | M | TLV | 57 |
| Alternative MME name | MME name 9.4.13 | O | TLV | 57 |
| EPS location update type | EPS location update type 9.4.2 | M | TLV | 3 |
| New location area identifier | Location area identifier 9.4.11 | M | TLV | 7 |
| Old location area identifier | Location area identifier 9.4.11 | O | TLV | 7 |
| TMSI status | TMSI status 9.4.21 | O | TLV | 3 |
| IMEISV | IMEISV 9.4.5 | O | TLV | 10 |

The Alternative MME name contains the name in the form of a fully qualified domain name (FQDN) as specified in TS 23.003. The underlined fields constitute the modified information element according to the invention.

According to TS 23.272 sect 5.2:
"4) The MME sends a Location Update Request (new LAI, IMSI, MME name, Location Update Type) message to the VLR. MME name is a FQDN string."

In 3GPP TS 29.118, the SGs stage 3 spec., the message is described in detail: SGsAP-LOCATION-UPDATE-REQUEST message shown in table 1:
As known in the prior art, in order to enable the MSC to page the UE for MT CS Call when the UE is camping in LTE, the MME creates an SGs association to the MSC. The MME will update the UE location through sending a Location update to the MSC.

The MME name contains the name in the form of a fully qualified domain name (FQDN) as specified in 3GPP TS 23.003.

The MME (MME_I) according to the invention will select an alternative MME and provide the identity of the selected MME the MSC. The "subsequently selected" MME shall page a UE for which it has no contexts, based on the information received from the MSC. This constitutes the normal MME behaviour; hence the invention requires no changes to the "subsequently selected" MME. Hence, it is possible that the invention may be implemented in a mixed MME pool comprising a restricted number of MME's according to the invention and prior art MME's. It is however noted that the redundancy effect s would be more effective if all MME's were constituted according to the embodiments of invention.

Hence, step 40 is optionally carried out, step 42, 44 (With list A2) and step 46 possibly reconfiguring the list A1 if provided - are performed.

### Further embodiments

1. A method for a switching unit (MSC_I) in a network in which a user equipment (UE) is being adapted to be attached and connected to a 2G/3G network for performing circuit switched, CS, communication with the network, or being adapted to be attached to a LTE network, for performing packet switched, PS, communication, wherein the PS communication is adapted to be performed via a mobility management entity, MME, which may be arranged in a pool of MME's,
   the user equipment (UE) being adapted to receiving page signals (18) so as to inform the user of incoming calls,
   the switching unit (MSC_I) being adapted for issuing page signals (16-1; 16-2; 16-3) to MME nodes,
   - receiving (13) an incoming external CS call;
   - performing detection (20) of a first selected MME, as to whether the first selected MME is ready or not;
   - if detecting a not ready state (22) concerning the selected MME (MME_I1), selecting (24) an alternative MME and issuing a page message (16; 16-1) to the alternative MME (MME_I2) (16-1) belonging to the same pool of MME's as the first MME.
2. Method according to further embodiment 1, wherein, the switching unit starts (18) a timer and wherein the detection (22) of the not ready state involves not receiving a service request signal from the selected MME before the timer expires.
3. Method according to further embodiment 1, wherein the detection (22) of the not ready state involves receiving a signal indicative of a failure from the selected MME.
4. Method according to any of further embodiment 1-3, wherein the selection (24) of an alternative MME is performed according to a predetermined list (A2) of at least one alternative MME stored in the switching unit (MSC).
5. Method according to any previous further embodiment, wherein it is examined (15A) whether a reset message (15) from a MME is received, and if so subsequently determining (20) the MME to be in a not ready state.
6. Method according to any further embodiments 1 - 5, wherein the predetermined list (A2) is established by issuing (45, 55) a DNS query to a DNS server.
(7.-8.)
9. Method according to any further embodiments 1 - 5, wherein the predetermined list is indicated in or resolved from information in a location update request message (44, 54) from a MME under an attach procedure or traffic update / location update procedure, which predetermined list is subsequently stored (46, 56) in the switching unit (MSC/VLR).
10. Method according to any further embodiments 1 - 5, wherein an initial list (A1) is stored in the switching unit concerning alternative MME's to select upon a serving MME being in a state of not ready.
11. Method according to any of further embodiment 9, wherein the initial list in the switching unit is updated when a MME makes an attach (42) or location (52) update.
12. Method according to any further embodiments 1 - 5, wherein a SGsAP-location-update-request message from the MME to the switching unit is provided, the message comprising a list (A2) of at least one alternative MME.
13. Method for a mobility management entity, MME, adapted for sending a location update request to a switching unit (MSC/VLR), wherein the MME provides a predetermined list of at least one alternative MME within a pool of MME's in a location update request message (44, 54).
14. Method according to further embodiment 13, wherein the predetermined list of at least one MME is in the form of a fully qualified domain name.
15. Switching unit (MSC_I) in a network in which a user equipment (UE) is being adapted to be attached and connected to a 2G/3G network for performing circuit switched, CS, communication with the network, or being adapted to be attached to a LTE network, for performing packet switched, PS, communication, wherein the PS communication is adapted to be performed via a mobility management entity, MME, which may be arranged in a pool of MME's,
   the user equipment (UE) being adapted to receiving page signals (18) so as to inform the user of incoming calls,
   the switching unit (MSC_I) comprising a control unit (CTRL_U1), a memory (MEM_1) and an interface unit (INT-U1) and an internal bus (B), the switching unit being adapted for issuing page signals (16-1; 16-2; 16-3) to MME nodes,
   for receiving (13) an incoming external CS call;
   for performing detection (20) of a first selected MME, as to whether the first selected MME is ready or not;
   the switching unit (MSC_I) further being adapted for - if detecting a not ready state (22) concerning the selected MME (MME_I1), selecting (24) an alternative MME and issuing a page message (16; 16-1) to the alternative MME (MME_I2) (16-1) belonging to the same pool of MME's as the first MME.
16. Mobility management entity, MME, (MME_I), comprising a control unit, (CTRL_U2), a memory (MEM_2) and an interface unit (INT_U2) an internal bus (B), the MME being adapted for sending a location update request to a switching unit (MSC/VLR), wherein the MME provides a predetermined list of at least one alternative MME within a pool of MME's in a location update request message (44, 54).

### Abbreviations

- PCC: Policy and Charging Control
- PCEF: Policy and Charging Enforcement Function
- PCRF: Policy and Charging Rules Function
- BBERF: Bearer Binding and Event Reporting Function
- IP CAN: IP Connectivity Access Network
- SGSN: Serving GPRS Support Node
- GGSN: Gateway GPRS Support Node
- UE: User Equipment
- UMTS: Universal Mobile Telecommunications System
- E-UTRAN: Evolved UTRAN
- UTRAN: Universal Terrestrial Radio Access Network
- GBR: Guaranteed Bit Rate
- EPS: Evolved Packet System
- EPC: Evolved Packet Core
- eNB: Evolved Node B
- PDN: Packet Data Network
- PDN-GW: PDN Gateway
- BSS: Base Station Subsystem
- PDP: Packet Data Protocol
- MME: Mobility Management Entity
- QoS: Quality of Service
- IE: Information Element

## Claims

1. A method for a switching unit (MSC_I) in a network in which a user equipment (UE) is being adapted to be attached and connected to a 2G/3G network for per-forming circuit switched, CS, communication with the network, or being adapted to be attached to a LTE network, for performing packet switched, PS, communication, wherein the PS communication is adapted to be performed via a mobility management entity, MME, which may be arranged in a pool of MME's, that is, a group of MME's being replaceable with one another and covering substantially the same geographical area, the user equipment (UE) being adapted to receiving page signals (18) so as to inform the user of incoming calls,
the switching unit (MSC_I) being adapted for issuing page signals (16-1; 16-2; 16-3) to MME nodes,
- receiving (13) an incoming external CS call;
- performing detection (20) of a first selected MME, as to whether the first selected MME is ready or not;
- if detecting a not ready state (22) concerning the selected MME (MME_I1), selecting (24) an alternative MME and issuing a page message (16; 16-1) to the alternative MME (MME_I2) (16-1) belonging to the same pool of MME's as the first MME,
wherein the selection (24) of the alternative MME is performed according to a pre-determined list of at least one alternative MME stored in the switching unit (MSC) **characterized in**
the switching unit, prior to receiving (13) an incoming external CS call,
- receiving (12) a location update request message (44, 54) from a MME under an attach procedure or traffic update / location update procedure, wherein the location update request message comprises the name of the MME serving the UE currently.

2. Method according to claim 1, wherein the alternative MME name or the predetermined list of at least one MME is in the form of a fully qualified domain name.

3. Method according to claim 1, wherein the location update request message is a SGsAP location update request message.

4. Method according to any of claims 1 - 3, wherein, the switching unit starts (18) a timer and wherein the detection (22) of the not ready state involves not receiving a service request signal from the selected MME before the timer expires.

5. Method according to any of claims 1 - 4, wherein the detection (22) of the not ready state involves receiving a signal indicative of a failure from the selected MME.

6. Method according to any previous claim, wherein it is examined (15A) whether a reset message (15) from a MME is received, and if so subsequently determining (20) the MME to be in a not ready state.

7. Method for a mobility management entity, MME, adapted for sending a location update request to a switching unit (MSC/VLR), wherein the MME provides a pre-determined list of at least one alternative MME within a pool of MME's in a location update request message (44, 54), **characterized in that** the MME providing
- a location update request message (44, 54) to the switching unit under an attach procedure or traffic update / location update procedure, wherein the location update request message comprises the name of a first MME serving the UE currently,
wherein the selection (24) of an alternative MME can be performed according to a predetermined list of at least one alternative MME stored in the switching unit (MSC) to which the location update request message is transmitted, such that a page message (16; 16-1) to the alternative MME (MME_I2) (16-1) belonging to the same pool of MME's as the first MME can be transmitted.

8. Method according to claim 7, wherein the alternative MME name or the predetermined list of at least one MME is in the form of a fully qualified domain name.

9. Method according to claim 7 or 8, wherein the location update request message is a SGsAP location update request message.

10. Switching unit (MSC_I) in a network in which a user equipment (UE) is being adapted to be attached and connected to a 2G/3G network for performing circuit switched, CS, communication with the network, or being adapted to be attached to a LTE network, for performing packet switched, PS, communication, wherein the PS communication is adapted to be performed via a mobility management entity, MME, which may be arranged in a pool of MME's, that is, a group of MME's being replaceable with one another and covering substantially the same geographical area,
the user equipment (UE) being adapted to receiving page signals (18) so as to inform the user of incoming calls,
the switching unit (MSC_I) comprising a control unit (CTRL_U1), a memory (MEM_1) and an interface unit (INT-U1) and an internal bus (B), the switching unit being adapted for issuing page signals (16-1; 16-2; 16-3) to MME nodes,
for receiving (13) an incoming external CS call;
for performing detection (20) of a first selected MME, as to whether the first selected MME is ready or not;
the switching unit (MSC_I) further being adapted for - if detecting a not ready state (22) concerning the selected MME (MME_I1), selecting (24) an alternative MME and issuing a page message (16; 16-1) to the alternative MME (MME_I2) (16-1) belonging to the same pool of MME's as the first MME,
wherein the selection (24) of the alternative MME is performed according to a pre-determined list of at least one alternative MME stored in the switching unit (MSC) **characterized in that**
the switching unit, prior to receiving (13) an incoming external CS call,
- the switching unit being adapted for receiving (12) a location update request message (44, 54) from a MME under an attach procedure or traffic update / location update procedure, wherein the location update request message comprises the name of the MME serving the UE currently.

11. Switching unit according to claim 10 wherein the alternative MME name or the predetermined list of at least one MME is in the form of a fully qualified domain name.

12. Switching unit according to claim 10 or 11, wherein the location update request message is a SGsAP location update request message.

13. Switching unit according to any previous claim, wherein the switching unit transmits (16-1) a page message to the selected alternative MME.

14. Mobility management entity, MME, (MME_I), comprising a control unit, (CTRL_U2), a memory (MEM_2) and an interface unit (INT_U2), an internal bus (B), the MME being adapted for sending a location update request to a switching unit (MSC/VLR), wherein the MME is adapted for providing
- a location update request message (44, 54) to the switching unit under an attach procedure or traffic update / location update procedure, wherein the location update request message comprises the name of a first MME serving the UE currently,
wherein the selection (24) of an alternative MME can be performed according to a predetermined list of at least one alternative MME stored in the switching unit (MSC) to which the message is transmitted such that a page message (16; 16-1) to the alternative MME (MME_I2) (16-1) belonging to the same pool of MME's as the first MME can be transmitted.

15. Mobility management entity, MME, (MME_I), according to claim 15, wherein the location update request message is a SGsAP location update request message.

16. Mobility management entity according to claim 15 or 16 wherein the alternative MME name or the predetermined list of at least one MME is in the form of a fully qualified domain name.
